# EUROPÄISCHE PATENTSCHRIFT

(11) **EP 0 782 945 B1**
(45) Veröffentlichungstag und Bekanntmachung des Hinweises auf die Patenterteilung: **15.09.1999**
(21) Anmeldenummer: 97102576.2
(22) Anmeldetag: 24.04.1995
(51) Int. Cl.: B60R 22/46, B60R 21/26, F42B 3/04, F16K 31/00

(54) **Gasgenerator für ein Fahrzeug-Rückhaltesystem**
Gas generator for a vehicle restraint system
Générateur de gaz pour système de retenue dans un véhicule

(30) Priorität: 02.05.1994 DE 4415373
(43) Veröffentlichungstag der Anmeldung: 09.07.1997
(62) Teilanmeldung aus: 95106077.1
(73) Patentinhaber: TRW Occupant Restraint Systems GmbH & Co. KG, 73551 Alfdorf (DE)
(72) Erfinder: Böhmler, Klaus, 73525 Schwäbisch Gmünd (DE)
(74) Vertreter: Degwert, Hartmut, Dipl.-Phys.

(56) Entgegenhaltungen:
- EP-A- 0 168 588
- EP-A- 0 529 501
- EP-A- 0 567 113
- DE-A- 4 217 969
- DE-A- 4 228 696
- DE-C- 4 234 276

## Beschreibung

Die Erfindung betrifft einen Gasgenerator für ein Fahrzeug-Rückhaltesystem, mit einem Gehäuse, das eine durch eine Berstmembran verschlossene Öffnung aufweist, einem Zünder und einer Treibmittelaufnahme. Ein solcher Gasgenerator gemäß dem Oberbegriff des Patentanspruchs 1 ist aus der EP-A-0 567 113 bekannt.

Ein derartiger Gasgenerator ist insbesondere in Verbindung mit einer Rückstrammeinrichtung eines Sicherheitsgurtsystems verwendbar. Wird der pyrotechnische Treibsatz im Falle eines Fahrzeugaufpralls gezündet, so wird die betreffende Antriebseinheit nach einer Zerstörung der Berstmembran vom durch die Verbrennungsgase erzeugten Druck beaufschlagt. Aufgrund der explosionsartigen Verbrennung des Treibsatzes sind die beweglichen Teile der Antriebseinheit beträchtlichen Beschleunigungskräften ausgesetzt.

Aus der oben genannten EP-A-0 567 113 ist bereits ein Gasgenerator bekannt, bei dem die Öffnung im Gehäuse des Gasgenerators gestuft ausgebildet ist. Mit den variablen Ausblasdurchmessern der Öffnung soll eine Anpassung des Gasgenerators an verschiedene Treibladungen erzielt werden.

Der Erfindung liegt die Aufgabe zugrunde, einen Gasgenerator der eingangs angegebenen Art zu schaffen, bei dem die Belastung, der mechanische Bauteile während einer Druckbeaufschlagung der Antriebseinheit des Rückhaltesystems ausgesetzt sind, verringert ist und die Ausnutzung der Generatorleistung verbessert wird.

Diese Aufgabe wird nach der Erfindung dadurch gelöst, daß die Berstmembran eine radial von innen nach außen zunehmende Wandstärke aufweist, mit einem zentralen Teil, der eine wesentlich geringere Wandstärke als der ihn umgebende Teil aufweist.

Bei dieser Ausführungsvariante tritt nach einer Zerstörung der Berstmembran in einer anfänglichen Phase nur ein relativ flacher Druckanstieg auf. Dies ist darauf zurückzuführen, daß beim Aufbrechen der Membran zunächst nur eine kleine Düse geöffnet wird. Mit dem Ausbrennen dieser am Anfang relativ kleinen Düse wird der Druckanstieg steiler. Die Düse erweitert sich zeitabhängig. Die zunächst durch die Berstmembran verschlossene Düse kann demnach insbesondere durch eine Art Gradientenboden der Treibmittelaufnahme gebildet sein, wobei der zeitliche Verlauf der Querschnittsvergrößerung der Düse vorzugsweise durch den Verlauf der Innenwand der Öffnung vorgebbar ist, deren Neigung sich vorzugsweise ändert.

In den Unteransprüchen sind weitere vorteilhafte Ausführungsvarianten angegeben.

Weitere Merkmale und Vorteile der Erfindung ergeben sich aus der folgenden Beschreibung und aus der Zeichnung, auf die Bezug genommen wird. In der Zeichnung zeigen:
- Fig. 1: einen Axialschnitt einer Ausführungsform eines pyrotechnischen Gasgenerators mit einem Gradientenboden; und
- Fig. 2: ein Druck-Zeit-Diagramm, in dem der Druckverlauf im Zusammenhang mit dem in Fig. 1 gezeigten Gasgenerator im Vergleich zu einem herkömmlichen Gasgenerator dargestellt ist.

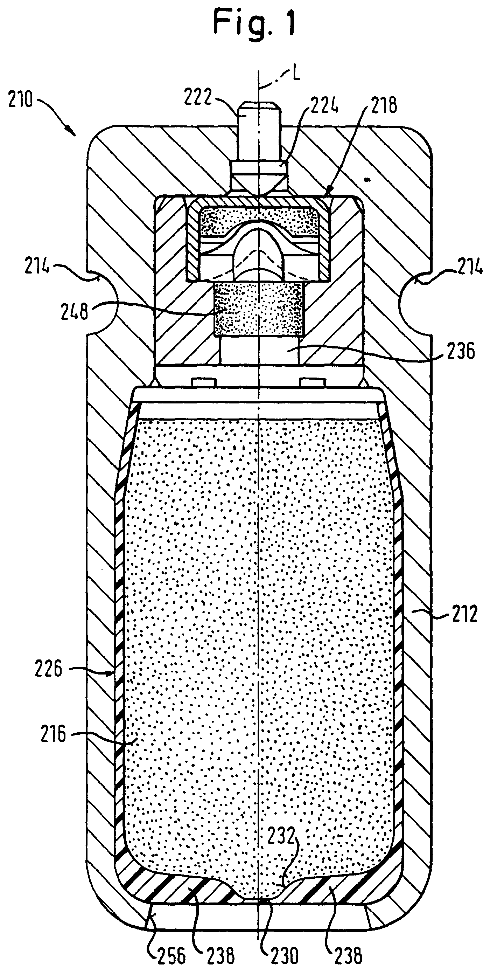

Der in Figur 1 dargestellte Gasgenerator 210 weist ein zylindrisches Gehäuse 212 mit äußeren Aufnahmen 214 für nicht gezeigte Sicherungsstifte oder dergleichen, durch die der Gasgenerator 210 zweckmäßigerweise in einer Bohrung eines Aggregats festgelegt wird, bei dem es sich beispielsweise um die Rückstrammeinrichtung eines Fahrzeug-Sicherheitsgurtsystems handeln kann.

Der Gasgenerator 210 ist mit einem Treibsatz 216 und einem Zünder 218 versehen, der beim dargestellten Ausführungsbeispiel ein mechanischer Schlagzünder ist.

Das Gehäuse 212 des Gasgenerators 210 weist gegenüber dem zentralen Bereich einer Aufschlagfläche des Zünders 218 eine gestufte Führungsöffnung auf, in der ein stiftartiges Schlagübertragungselement 222 aufgenommen ist. Dieses Schlagübertragungselement 222 ragt aus der Führungsöffnung heraus, so daß es von einem nicht gezeigten Schlagteil beaufschlagbar ist, das Bestandteil einer beispielsweise mechanischen Auslösevorrichtung ist. Das stiftartige Schlagübertragungselement 222 besitzt einen dem Zünder 218 zugewandten verbreiterten, zum Zünder 218 hin jedoch spitz zulaufenden Kopf 224, der in einer Erweiterung der gestuften Führungsöffnung aufgenommen ist, um das Schlagübertragungselement 222 im Inneren zu sichern. Wird das nicht gezeigte Schlagteil gegen das aus dem Gehäuse 212 herausragende Ende des Schlagübertragungselements 222 getrieben, so dringt die Spitze des Kopfes 224 zentrisch in die Anschlagfläche des Zünders 218 ein, wodurch die Zündung des Gasgenerators 210 erfolgt.

Der Zünder 218 steht über einen einen Booster 248 enthaltenden Zündkanal 236 mit einer in das zylindrische Gehäuse 212 des Gasgenerators 210 eingesetzten Treibmittelaufnahme 226 in Verbindung, die den Treibsatz 216 enthält.

Die napfartige, vorzugsweise aus Kunststoff bestehende Treibmittelaufnahme 226 besitzt einen sich an eine Bodenwand 238 anschließenden längeren zylindrischen Abschnitt und einen kürzeren, sich zum Zünder 218 hin konisch verjüngenden Abschnitt. Der Übergang vom zylindrischen Abschnitt der Treibmittelaufnahme 226 zu deren Bodenwand 238 ist gerundet. Die Treibmittelaufnahme 226 ist vorzugsweise im Preßsitz in einen entsprechend ausgebildeten Abschnitt der das zylindrische Gehäuse 212 durchdringenden Stufenbohrung eingesetzt. Hierbei besitzt das konisch verjüngte Ende der Treibmittelaufnahme 226 einen geringfügigen Abstand zu einer Stufe zwischen dem Abschnitt größeren Querschnitts und dem Abschnitt kleineren Querschnitts der das Gehäuse 212 durchdringenden Stufenbohrung, in dem ein den Zünder 218 sowie den Booster 248 enthaltender Einsatz aufgenommen ist. Das vom Zünder 218 abgewandte, der Treibmittelaufnahme 226 zugewandte Ende des Einsatzes ist gegenüber der Stufe ebenfalls zurückgesetzt.

Am zum Zünder entgegengesetzten Ende weist das Gehäuse 212 eine Öffnung 256 auf, die zu einer Bodenwand 238 der Treibmittelaufnahme 226 koaxial ist. Die Bodenwand 238 ist ein Gradientenboden und enthält eine normalerweise durch die dünne Berstmembran 230 verschlossene Öffnung 232, die einen radial von innen nach außen hin zunehmenden Querschnitt aufweist. Die dünne Berstmembran 230 verschließt diese Öffnung 232 im Bereich kleinsten Durchmessers. Die die Berstmembran 230 enthaltende Bodenwand 238 der Treibmittelaufnahme 226 liegt dem zünderseitigen Ende dieser Treibmittelaufnahme 226 gegenüber. Die Öffnung 232 ist in der Bodenwand 238 mittig angeordnet und damit sowohl zum zylindrischen Gehäuse 212 als auch zur Treibmittelaufnahme 226 koaxial. Im zylindrischen Gehäuse 212 des Gasgenerators 210 sind der Zünder 218 und die Treibmittelaufnahme 226 wiederum koaxial zur Längsachse L des Gehäuses 212 hintereinander angeordnet.

Über die äußere Öffnung 256 ist der Gasgenerator 210 an eine Antriebseinheit eines Fahrzeug-Rückhaltesystems anschließbar, bei dem es sich beispielsweise um eine Rückstrammeinrichtung eines Sicherheitsgurtsystems handeln kann, die beispielsweise sowohl an einem Gurtaufroller als auch an einem Gurtschloß angeordnet sein kann.

Bei der in Fig. 1 gezeigten Ausführungsform eines pyrotechnischen Gasgenerators 210 mit einer einen Gradientenboden 238 aufweisenden Treibmittelaufnabme 226 wird im Falle eines Unfalls über den Zünder 218 und den Booster 248 der in der Treibmittelaufnahme 226 enthaltene Treibsatz 216 gezündet. Unmittelbar danach wird durch einen entsprechenden Druckaufbau innerhalb der Treibmittelaufnahme 226 die dünne Berstmembran 230 zerstört, wodurch eine relativ kleine Düse geöffnet wird. Damit ergibt sich anfänglich ein relativ flacher Druckanstieg. Erst mit dem Ausbrennen der kleinen Düse wird der Druckanstieg steiler, wobei sich diese Düse in Abhängigkeit von der Zeit entsprechend dem Verlauf der Innenwand der Öffnung 232 erweitert. Durch eine entsprechende Ausbildung dieses Gradientenbodens kann daher der gewünschte Verlauf des Druckanstiegs festgelegt werden. Durch den anfänglich geringeren Druckanstieg wird die Gefahr einer Beschädigung und/oder einer Beeinträchtigung des Rückhaltesystems auf ein Minimum herabgesetzt.

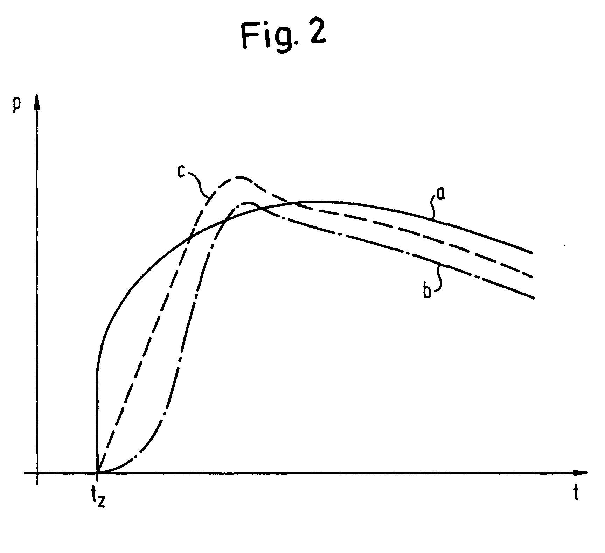

Die Kurve a) in Fig. 2 zeigt den zeitlichen Druckverlauf eines herkömmlichen pyrotechnischen Gasgenerators. Danach ergibt sich unmittelbar nach dem Zündzeitpunkt t_{Z} ein relativ steiler Druckanstieg, an den sich ein Abschnitt anschließt, dessen Steigung bis zum Erreichen des Scheitelwerts kontinuierlich abnimmt. Anschließend wird der Druck p mit zunehmender Zeit t wieder geringer.

Mit der Kurve b) der Fig. 2 ist ein Druckverlauf gezeigt, wie er unter Verwendung eines erfindungsgemäßen pyrotechnischen Gasgenerators erzielbar ist. Danach ergibt sich im Anschluß an den Zündzeitpunkt t_{Z} zunächst ein relativ flacher Druckanstieg. An diese anfängliche Phase mit relativ flachem Druckanstieg schließt sich eine Phase mit einem relativ steilen Druckanstieg an, während der ein rascher Antrieb des betreffenden Rückhaltesystems erfolgt. Nachdem der Scheitelpunkt erreicht ist, nehmen die Druckwerte mit der Zeit wieder ab.

Durch eine entsprechende Auslegung des Gasgenerators ist überdies auch ein solcher Druckverlauf möglich, wie er durch die Kurve c) in Fig. 2 wiedergegeben ist. In diesem Fall wird bis zum Erreichen des Scheitelpunkts ein stetiger Druckanstieg erzielt, der geringer als der anfängliche Druckanstieg bei einem herkömmlichen Gasgenerator (vgl. Kurve a)) und größer als der anfängliche Druckanstieg gemäß der Kurve b) ist. Der Scheitelwert ist größer als bei den beiden vorhergehenden Fällen a) und b).

Durch die Verringerung des Anfangsdrucks werden die Belastungen der mechanischen Bauteile des Rückhaltesystems deutlich verringert, wodurch die Gefahr einer Beschädigung und/oder Beeinträchtigung der vom Druck beaufschlagten Bauteile dieses Rückhaltesystems geringgehalten wird. Der erfindungsgemäße pyrotechnische Gasgenerator ist mit besonderem Vorteil insbesondere in Verbindung mit einer Rückstrammeinrichtung eines Sicherheitsgurtsystems verwendbar, wobei diese Rückstrammeinrichtung insbesondere sowohl an einem Gurtaufroller als auch an einem Gurtschloß angeordnet sein kann.

## Patentansprüche

1. Gasgenerator für ein Fahrzeuginsassen-Rückhaltesystem, mit einem Gehäuse (212), das eine durch eine Berstmembran verschlossene Öffnung (256) aufweist, einem Zünder (218) und einer Treibmittelaufnahme (226), dadurch gekennzeichnet, daß die Berstmembran (230) in der Bodenwand (238) der Treibmittelaufnahme (226) angeordnet ist und die Bodenwand (238) eine radial von innen nach außen zunehmende Wandstärke aufweist, mit einem zentralen Teil, der durch die Berstmembran (230) gebildet wird und eine wesentlich geringere Wandstärke als der ihn umgebende Teil aufweist.

2. Gasgenerator nach Anspruch 1, dadurch gekennzeichnet, daß die Berstmembran durch den Boden der Treibmittelaufnahme (226) gebildet ist.

3. Gasgenerator nach einem der vorhergehenden Ansprüche, dadurch gekennzeichnet, daß er ein zylindrisches Gehäuse (212) besitzt, in dem der Zünder (218) und die Treibmittelaufnahme (216) koaxial zur Längsachse des Gehäuses (212) hintereinander angeordnet sind.

4. Gasgenerator nach Anspruch 3, dadurch gekennzeichnet, daß die Öffnung (232) zur Längsachse (L) des Gehäuses (212) koaxial ist.

5. Gasgenerator nach einem der vorhergehenden Ansprüche, dadurch gekennzeichnet, daß die Treibmittelaufnahme (226) als im Gehäuse (226) aufgenommener Einsatz ausgebildet ist.

6. Gasgenerator nach einem der vorhergehenden Ansprüche, dadurch gekennzeichnet, daß die Treibmittelaufnahme (226) aus Kunststoff besteht.

7. Gasgenerator nach einem der vorhergehenden Ansprüche, dadurch gekennzeichnet, daß die Antriebseinheit einer Rückstrammeinrichtung eines Sicherheitsgurtsystems zugeordnet ist.

## Claims

1. A gas generator for a vehicle occupant restraint system comprising a housing (212) having an opening (256) closed by a blow-out diaphragm, an ignitor (218) and a propellant receiving means (226), characterized in that the blow-out diaphragm (230) is arranged in the bottom wall (238) of the propellant receiving means (226) and the bottom wall (238) has a wall thickness increasing radially from the inside towards the outside, with a central portion formed by the blow-out diaphragm (230) and having a wall thickness which is substantially less than the wall thickness of the surrounding portion.

2. The gas generator as claimed in claim 1, characterized in that the blow-out diaphragm is formed by the bottom of the propellant receiving means (226).

3. The gas generator as claimed in any one of the preceding claims, characterized in that it has a cylindrical housing (212) in which the ignitor (218) and the propellant receiving means (216) are arranged in tandem coaxially to the longitudinal axis of the housing (212).

4. The gas generator as claimed in claim 3, characterized in that the aperture (232) is coaxial to the longitudinal axis (L) of the housing (212).

5. The gas generator as claimed in any one of the preceding claims, characterized in that the propellant receiving means (226) is designed in the form of an insert accommodated in the housing (226).

6. The gas generator as claimed in any one of the preceding claims, characterized in that the propellant receiving means (226) consists of a plastic material.

7. The gas generator as claimed in any one of the preceding claims, characterized in that the drive unit is associated with a pretensioner of a safety belt system.

## Revendications

1. Générateur de gaz pour un système de retenue de passagers d'un véhicule, comprenant un boîtier (212), qui présente un orifice (256) fermé par une membrane de rupture, un allumeur (218) et un logement pour un agent de propulsion (226),
caractérisé en ce que la membrane de rupture (230) est disposée dans la paroi de fond (238) du logement (226) destiné à l'agent de propulsion et la paroi de fond (238) présente une épaisseur de paroi qui va en augmentant radialement de l'intérieur vers l'extérieur, avec une partie centrale, qui est constituée par la membrane de rupture (230) et qui présente une épaisseur de paroi sensiblement plus faible que la partie qui l'entoure.

2. Générateur de gaz selon la revendication 1,
caractérisé en ce que la membrane de rupture est constituée par le fond du logement (226) destiné à l'agent de propulsion.

3. Générateur de gaz selon l'une des revendications précédentes, caractérisé en ce qu'il possède un boîtier cylindrique (212), dans lequel l'allumeur (218) et le logement, destiné à l'agent de propulsion (216), sont disposés l'un derrière l'autre de façon coaxiale par rapport à l'axe longitudinal du boîtier (212).

4. Générateur de gaz selon la revendication 3,
caractérisé en ce que l'orifice (232) est coaxial à l'axe longitudinal (L) du boîtier (212).

5. Générateur de gaz selon l'une des revendications précédentes, caractérisé en ce que le logement (226), destiné à l'agent de propulsion, est constitué sous la forme d'un insert logé dans le boîtier (212).

6. Générateur de gaz selon l'une des revendications précédentes, caractérisé en ce que le logement (226), destiné à l'agent de propulsion, est en matière plastique.

7. Générateur de gaz selon l'une des revendications précédentes, caractérisé en ce que l'unité d'entraînement est associée à un dispositif de rétraction d'un système de ceinture de sécurité.
